# EUROPEAN PATENT SPECIFICATION

(11) **EP 0 351 225 B1**
(45) Date of publication and mention of the grant of the patent: **19.06.1996**
(21) Application number: 89307129.0
(22) Date of filing: 13.07.1989
(51) Int. Cl.: H01J 35/10, F16C 43/06

(54) **A bearing assembly for a rotating anode X-ray tube device**
Lageranordnung für eine Drehanoden-Röntgenröhre
Assemblage de palier pour tube à rayons X à anode tournante

(30) Priority: 15.07.1988 JP 176712/88
(43) Date of publication of application: 17.01.1990
(73) Proprietor: KABUSHIKI KAISHA TOSHIBA, Kawasaki-shi, Kanagawa-ken 210 (JP)
(72) Inventor: Kubo, Masahiro c/o Intellectual Property Division, Minato-ku Tokyo (JP)
(74) Representative: BATCHELLOR, KIRK & CO.

(56) References cited:
- FR-A- 360 842
- FR-A- 383 222
- FR-A- 393 405
- US-A- 2 786 954
- US-A- 3 634 870
- US-A- 3 958 846
- US-A- 4 097 759
- US-A- 4 393 511
- US-A- 4 519 093

## Description

The present invention relates to a bearing assembly suitable, but not exclusively, for a rotating anode X-ray tube device.

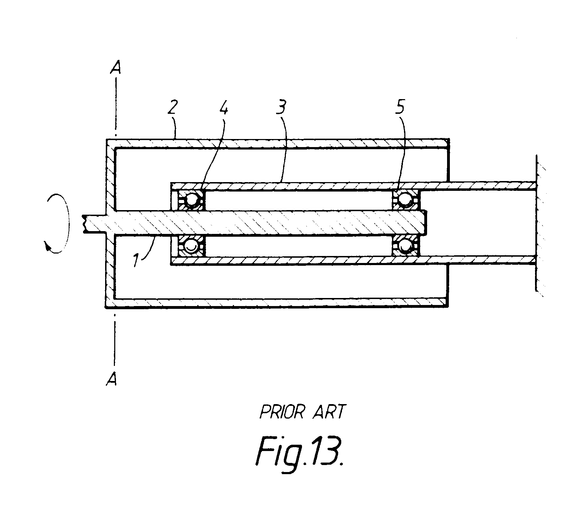

Ball bearings are well-known for supporting relatively rotating members. Among the variety of devices which utilise ball bearings, the rotating members often become imbalanced because of the structure of the particular device. Sometimes the imbalance is not easily corrected. For instance, as illustrated in Fig. 13, a cylinder 2 is fixed to the outer periphery of a rotary member or shaft 1. A supporting cylinder 3 is partially fitted into the rotary shaft 1. Ball bearings 4 and 5 are interposed between the rotary shaft 1 and the supporting cylinder 3. In this device, rotary shaft 1 is separable from cylinder 2 at a location indicated by the line A-A in the Figure. After providing ball bearings 4 and 5 between rotary shaft 1 and supporting cylinder 3, the location indicated by the line A-A is joined to cylinder 2. In this arrangement, the installation of ball bearings 4 and 5 requires the use of sleeves and nuts. These components, however, tend to cause an imbalanced state in the rotary shaft.

A balancing test is generally performed on an imbalanced rotary member, and in view of the results of the test, it is generally necessary to modify the rotary member or its components in order to correct the imbalance. In the above-described construction, the rotary member has to be temporarily separated at the location shown by the line A-A to correct the imbalance. However, the rotary member is often also imbalanced because of its separation from the cylinder and its subsequent rejoining. Consequently, it is quite difficult and time-consuming to correct an imbalanced condition in a rotary member.

A rotating anode X-ray tube device is a typical device which may be subject to the foregoing imbalance problem. The rotating anode X-ray tube device generally comprises a vacuum envelope, a cathode provided in the vacuum envelope and a rotating anode also provided in the vacuum envelope. The rotating anode is spaced from the cathode. A support member for supporting the rotating anode is provided at one end thereof, and is coaxial with the rotating anode. A hollow cylindrical rotor mounts the support member remote from the rotating anode. The rotor comprises a driving motor which cooperates with a stator disposed concentrically with the motor and outwardly of the vacuum envelope. A cylindrical first member is disposed concentrically inside the rotor. The rotor first member has one end connected to the support member and the other end connected to the stator via a plurality of ball bearings interposed between them to provide for relative rotation. Generally the rotor is positioned close to the stator. Also the rotor is generally cylindrically shaped and light in weight.

In such a rotating anode X-ray tube device, the rotating anode increases in temperature during operation. Therefore, it is necessary to position the ball bearings as far away from the rotating anode as possible to avoid the effects of the increased operating temperatures. Consequently, the ball bearings must be disposed in the hollow interior of the cylindrical rotor, with the result that the arrangement of the components provided in the vacuum envelope resembles the construction depicted in Figure 13. With this arrangement, correcting the imbalance of the rotary member is difficult and time consuming.

A typical rotating anode X-ray tube device generally uses ball bearings having balls where an outer surface of each ball is coated with a lubricating film layer of silver, lead or molybdenum disulfide, all of which exhibit a lubricating effect in a vacuum. In the above-described rotating anode X-ray tube device, it is necessary to install the rotor after installing the bearings. Hence the test of the imbalance of the rotor and the correction of the imbalance have to be performed in an assembly having ball bearings where the balls are coated with the lubricating film layer. In the above-described rotating anode X-ray tube device, the rotating anode is generally operated at approximately 10,000 cycles per minute. The test for imbalance has to be carried out at the same speed. If this test is done ***in the above described assembly*** the lubricating film layer on the surface of the ball is damaged resulting in either a reduced life or a decline in reliability of the X-ray tube device, or both.

Thus, the conventional ***bearing*** device employing ball bearings exhibits the following disadvantages. It is difficult and time-consuming to correct the imbalanced condition of the rotary member, the lubricating film layer on the surface of each ball may be damaged or peeled off during the balancing test and the correction of the imbalance of the rotary member.

Accordingly, it is an object of this invention to provide a rotating anode X-ray tube device ***capable of performing*** a balancing test on a rotary member and the correction of an imbalance in the rotary member.

Another object of the present invention is to provide a rotating anode X-ray tube device capable of preventing damage to the bearings which is caused when the balancing test and the correction of the imbalance of the rotary member is performed.

The reader may be further enlightened concerning the prior art technical problems alleviated by the present invention by reference to the closest known prior art of US-A-3 634 870 with reference to which claim 1 of this application is characterised. Further relevant prior art is disclosed in US-A-2 786 954.

According to the present invention there is provided a bearing assembly for an X-ray tube device comprising:
a hollow cylindrical member (27, 76);
a shaft (26, 74) concentrically disposed in an axial chamber in said cylindrical member (27, 76);
at least one separable type ball ***bearing*** (28, 29) interposed between said cylindrical member (27,76) and shaft (26, 74) for supporting a relative rotating motion therebetween;
said ball bearing (28, 29) having separable inner (33, 35) and outer races (38, 45), ***whereby*** one of said inner (33, 35) or said outer race (38, 45) ***is*** axially displaceable relative to the other of the races ***in order*** to open the bearing ***at one end****,* and
characterised in that a through-hole (44, 89, 92) serves as a ball introduction passageway during assembly, said through-hole (44, 89, 92) leading ***radially outwardly*** from a position near the end of ***the axially displaceable race*** to an outer surface of said cylindrical member (27, 76) or ***radially inwardly through the peripheral surface of the shaft (26, 74)****.*

Embodiments of a bearing assembly and a rotating anode X-ray tube device will now be described, by way of example only, with reference to the accompanying drawings; in which,
Fig. 1 is a vertical sectional view of a rotating anode X-ray tube device according to a first embodiment of the present invention;
Fig. 2 is an enlarged view illustrating a section of the rotating anode X-ray tube device of Fig. 1;
Figs. 3-7 are views of sections of the rotary member of the X-ray tube device of Fig. 1 during assembly thereof;
Fig. 8 is a partial vertical sectional view of the rotating anode X-ray tube device according to a second embodiment of the present invention;
Fig. 9 is a partial vertical sectional view of a rotating anode X-ray tube device according to a third embodiment of the present invention;
Fig. 10 is a vertical sectional view of a rotating anode X-ray tube device according to a fourth embodiment of the present invention;
Fig. 11 is a vertical sectional view of a rotating anode X-ray tube device according to another embodiment of the present invention;
Fig. 12 is a partial vertical sectional view of a rotating anode X-ray tube device according to still another embodiment of the present invention; and
Fig. 13 is a schematic view of a rotary support member of a conventional rotating anode X-ray tube device.

Reference will now be made in detail to the present preferred embodiment of the invention as illustrated in the accompanying drawings.

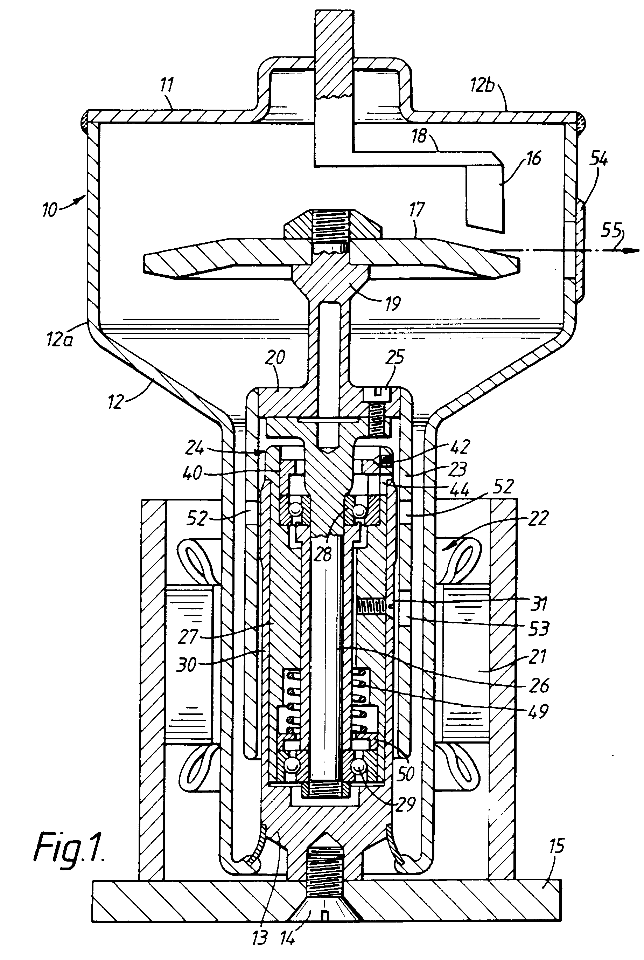

In accordance with the present invention, there is provided a rotating anode X-ray tube device. The device is shown generally at 10 in Figure 1. X-ray tube device 10 includes a vacuum envelope 11. Vacuum envelope 11 comprises an envelope body 12 formed of an insulating material and having an opening facing downward in Figure 1. A metallic sealing member 13 is provided on the lower end, as shown in Figure 1, of envelope body 12 to airtightly seal the opening of envelope body 12. Sealing member 13 is fastened to a metallic base 15 with a screw 14.

Disposed at an upper portion of Figure 1 in a space formed in vacuum envelope 11 are a cathode 16 with a filament and a rotating anode 17 having a disc-like configuration so that the cathode 16 faces the periphery of rotating anode 17. Cathode 16 is fixed to one end of a cathode support 18 which is formed of a metallic material. The other end of cathode support 18 airtightly penetrates a wall of envelope body 12 and leads to the atmosphere. A driving hysteresis motor 22 comprises a motor stator 21 and is positioned outside the envelope body 12.

As shown in Figure 1, rotatable anode 17 is fastened at its centre to the upper end portion of a metallic support member 19 by means of a screw. A lower end portion, as shown in Figure 1, of support member 19 ***is integrally formed with an*** end cap 20. The end cap 20 is coaxial with the rotating anode 17. A cylindrical rotor 23 is coaxial with the end cap 20 and is fixed thereto by shrink-fitting or press-fitting. End cap 20 is fixed by a screw to a bearing assembly 24. Bearing assembly 24 includes a metallic shaft 26 which is coaxial with the rotating anode 17. A hollow metallic, cylindrical member 27 is disposed concentrically between shaft 26 and rotor 23, so that the shaft 26 and the rotor 23 can rotate with respect to the static member 27. A cylindrical unit 30 extends from sealing member 13. Static member 27 is attached to cylindrical unit 30 with a screw 31.

Two separation-type ball bearings 28 and 29 are interposed between the cylindrical member 27 and the shaft 26 and are axially spaced. The bearings 28 and 29 are formed with inner races 33 and 35, respectively, and outer races 38 and 45, respectively. Balls 43 are disposed between the inner race 33 and the outer race 38 and the balls 46 are disposed between the inner race 35 and the outer race 45. The balls 46 are coated with a lubricating film layer. Since a separation-type bearing is used, it is unnecessary to unite the inner and outer races and the balls.

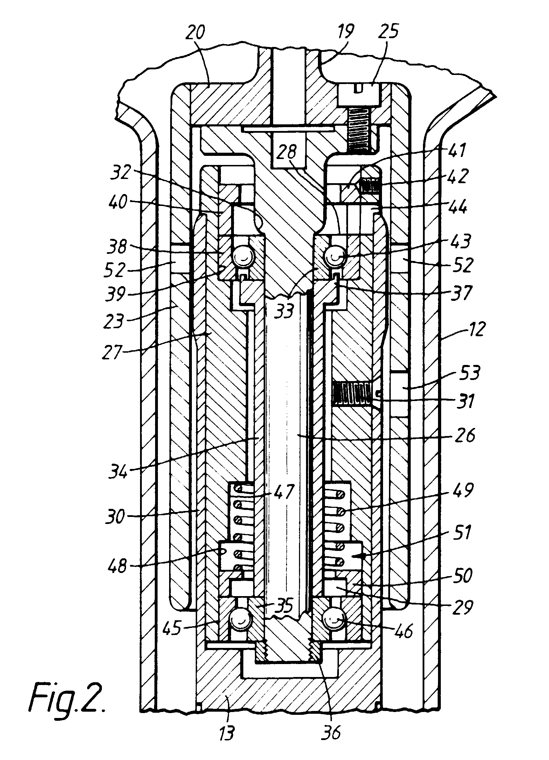

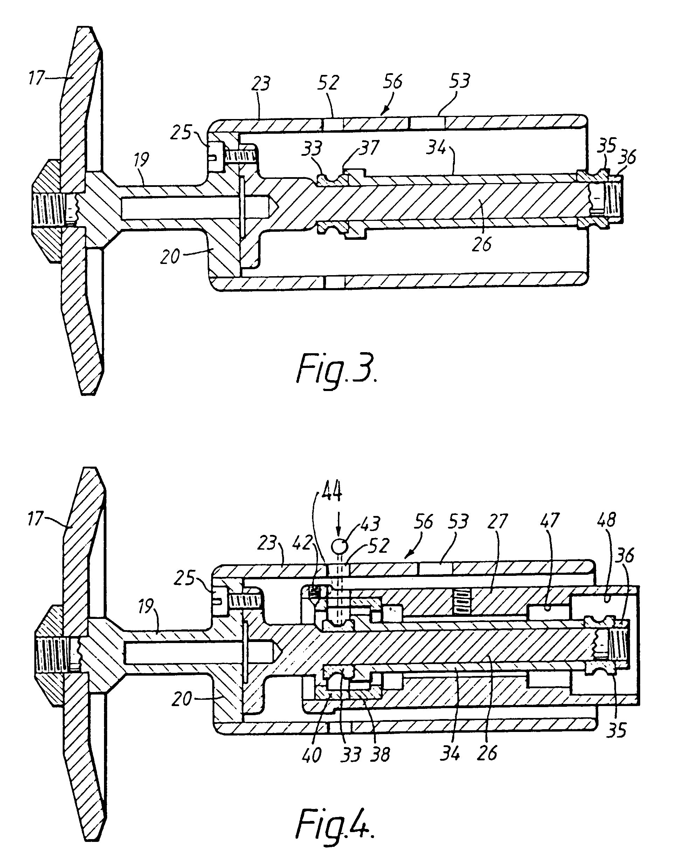

The installation of the separation-type ball bearings is as follows. As shown in Figure 3, inner races 33 and 35 have ball-receiving grooves. As illustrated in Figure 2, the inner race 33 of the ball bearing 28 is fixed to shaft 26 and is ***bounded*** by stepped portion 32. A sleeve 34 is fitted on the shaft 26. The inner race 35 of the ball bearing 29 is also fixed to the shaft 26. A nut 36 is mounted on the bottom of the shaft 26 as shown in Figure 2. An end of the sleeve 34 is positioned near the inner race 33 and is formed with a protruding peripheral wall 37 which extends parallel to a radially outer peripheral surface of the inner race 33 for a short distance. Alternatively, the protruding peripheral wall 37 may be formed integrally with the inner race 33. The protruding peripheral wall 37 prevents dispersion of balls 43, 46 of the ball bearings when they are installed, which will be discussed hereinafter.

The outer races 38 and 45 are mounted while the balls 43 and 46 are held in the ball receiving grooves of the inner races 33 and 35, respectively. The outer race 38 of the separation-type angular ball bearing 28 is formed with a ball receiving surface for receiving ball 43. Similarly, the outer race 45 of the separation-type ball bearing 29 is formed with a ball-receiving surface for receiving the ball 46. The cylindrical member 27 is formed with a through hole 44 which has a diameter slightly larger than that of each ball 43 to permit each ball 43 to pass therethrough and into the ball-receiving surface of the outer race 38 and the ball receiving groove of the inner race 33. Similarly, the outer race 45 of the separation-type ball bearing 29 is formed with a ball-receiving surface for receiving the ball 46.

As shown in Figure 2, two stepped large diameter portions 47 and 48 are provided on the inner surface of the cylindrical member 27. The portions 47 and 48 are disposed near the sealing member 13. A coil spring 49 is installed having one end abutting a shoulder provided by the large diameter portion 47. A slide ring 50 is then mounted slidably in the axial direction so as to push against spring 49. Subsequently, the race 45 is mounted slidably in the axial direction so that it is biased against the central portion of the static ***cylindrical*** member 27.

The bias of the spring 49 acts against a large diameter portion 39 formed on the inner surface of the static member 27. The outer race 38 abuts the stepped portion formed at the boundary of the large diameter portion 39. A space ring 40 has the same inside diameter as that of the opening of the outer race 38 and is mounted on a portion of the cylindrical member 27 closer to the end cap 20 than the outer race 38. The outer race 38 and the space ring 40 may be formed integrally. The through-hole 44 penetrates the space ring 40 and the cylindrical member 27 and extends radially from the inner surface of the space ring 40 to the outer surface of the cylindrical member 27. A small diameter ring 41 having an inside diameter substantially equal to the minimum inside diameter of the outer race 38 is formed integrally with an end portion of space ring 40. The cylindrical member 27 is fitted with a screw 42 which performs a wedge function to force space ring 40 onto the outer race 38 through the intermediary action of the small diameter ring 41. The space ring 40 and the outer race 38 abut the cylindrical member 27 by virtue of the force of the screw 42. Because of this force, the ball 43 can be held between the outer race 38 and the inner race 33.

The force of the spring 49 moves the outer races 38 and 45 and consequently the balls 43 and 46 against the fixed inner races 33 and 35, respectively, to hold the ball 46 in place. The coil spring 49 and the slide ring 50 constitute a pressurising mechanism for securely holding the balls 43 and 46 between the inner race 33 and the outer race 45. At the same time the coil spring 49 and the slide ring 50 facilitate installation of the ball 46 by moving the outer race 45.

Through-holes 52, each having almost the same diameter as that of the through-hole 44, are formed 180° apart in the peripheral wall of the rotor 23 in such a way that the through-holes 52 can be disposed in radial alignment with the ball receiving surface of the inner race 33. The through-hole 52 is formed as a slot extending in the peripheral direction. Holes 53 are formed in the peripheral wall of the rotor 23 120° apart so as to be radially alignable with a screw 31 which permits the screw 31 to be fastened from the outer surface of rotor 23.

Numeral 54 designates a transmission window for admitting a beam of X-ray 55 emitted from rotating anode 17. In the rotating anode X-ray tube device according to the present invention, a filament is energised while driving motor 22. A predetermined DC voltage is generated between base 15 and cathode support 18, whereby the X-ray 55 can be emitted from the anode 17.

According to the present invention, the rotary members are assembled in the vacuum envelope 11. The rotary members include the rotating anode 17, the support member 19, rotor 23, shaft 26, the inner race of the separation-type angular ball bearing 29 and the nut 36. A balancing test and correction of imbalance are performed on the assembled rotary members in the atmosphere with the aid of the balls and the outer race. Thereafter, the rotary members are incorporated into the device as shown in Figure 1. In the case of assembly as shown in Figure 3, the first step is to assemble a rotary member 56. A balancing test is performed on rotary member 56 in the atmosphere by using testing balls, a testing outer race and stator of the motor. The outer races are tested on a testing portion. Test portion includes the cylindrical member 27, the space ring 40, the coil spring 49, the slide ring 50 and the through-hole 44. The use of such a testing portion eliminates the necessity for actually employing the balls 43 and 46 during testing. In addition, any imbalanced state of the rotary member 56 can be corrected without disassembling the rotary member. The reason for this will be understood from the following description.

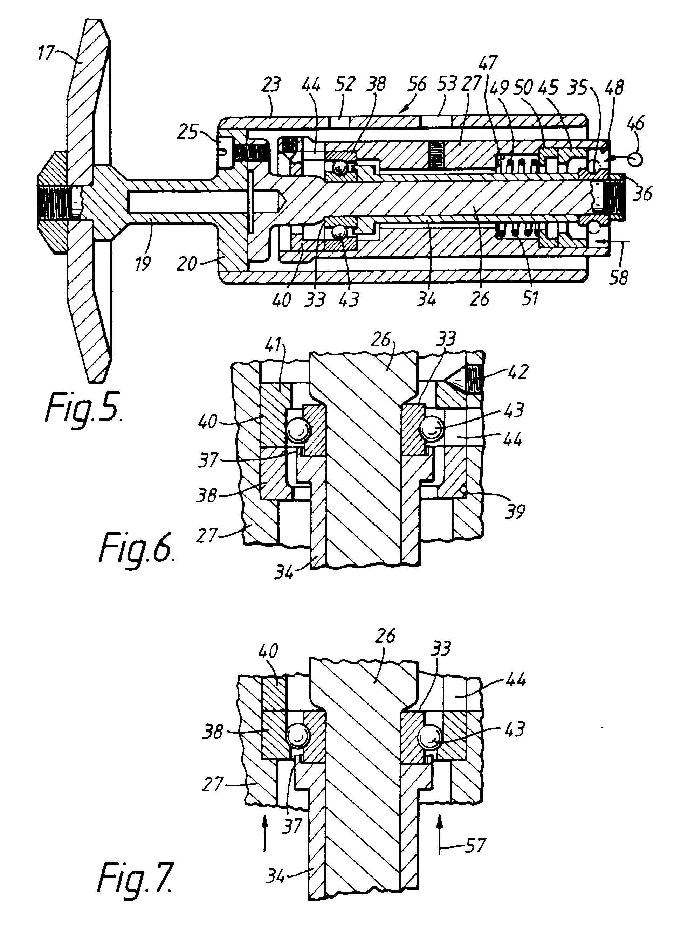

After correcting the imbalanced state of the rotary member 56, as shown in Figure 4, the cylindrical member 27 is fitted to the shaft 26. At this time, only the outer race 38, the space ring 40 and the screw 42 are mounted on the cylindrical member 27. As depicted in Figure 4, the degree to which the cylindrical member 27 is fitted to the shaft 26 is adjusted so that the ball receiving groove formed in the outer surface of the inner race 33 is visible from the outer surface of the rotor 23 through the through-holes 44 and 52. In this state the balls 43 are dropped into the ball receiving groove formed in the inner race 33 one by one as the necessity arises via the through-holes 44 and 52. Every time the balls 43 are dropped, they are fitted in the ball receiving groove formed in the inner race 33. Figure 6 shows a bearing assembly where the balls 43 have been fitted. The balls 43 are restrained from movement in the axial direction with the help of the protruding peripheral wall 37 and the small diameter ring 41.

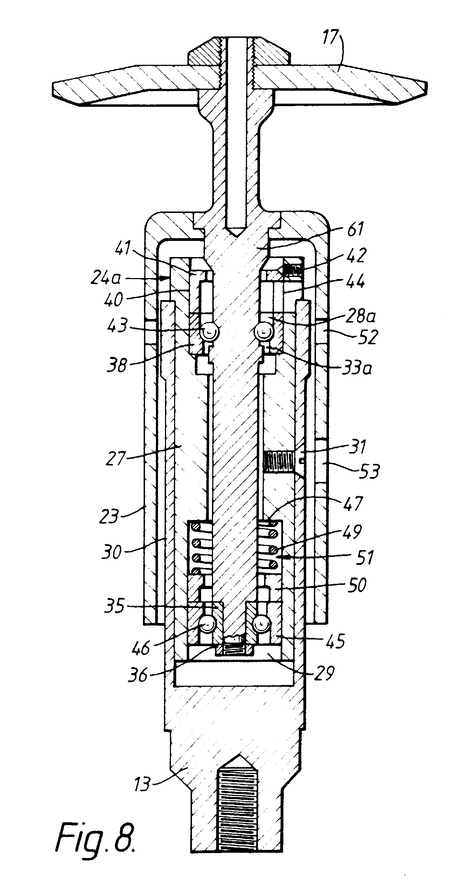

As shown in Figure 7, the cylindrical member 27 is then moved, as indicated by a solid line arrow 57, toward the end cap 20, thereby increasing the fit between the end cap 20 and the cylindrical member 27. As the fit is increased, the ball receiving surface of outer race 38 is brought into contact with the ball 43. The outer race 45 is biased towards the outer race 38, resisting the force of the coil spring 49, in which state the balls 46 are held in the ball-receiving groove of the inner race 35. Subsequently, when the outer race 45 is released, the outer race 45 is returned to its original position by virtue of the force of the coil spring 49, with the result that the ball-receiving surface of the outer race 45, as shown in Figure 2, engages the ball 46. The rotary member 56 is consequently rotatably supported on the cylindrical member 27 through the separation-type angular ball bearings 28 and 29 and the imbalance of the rotary member in this arrangement has been corrected. As a result, the rotary member 56 can readily be taken out without disassembling it. When taking out the rotary member 56, the above-described procedures may be reversed.

After incorporating the rotary member, the through-hole 44 is closed. The assembly of the rotating anode X-ray tube device after incorporating the rotary member is carried in the following manner. First, cylindrical unit 30 extending from the sealing member 13 is fitted to the outer periphery of the cylindrical member 27. Cylindrical unit 30 is fixed to the cylindrical member 27 with the screw 31 which is screwed in the hole 53 formed in the rotor 23. Next, as illustrated in Figure 1, a cylindrical unit 12a of envelope body 12 is mounted and airtightly connected to sealing member 13. An upper opening of cylindrical unit 12a is airtightly sealed with an upper cover 12b fitted with cathode support 18 and cathode 16. The vacuum envelope 11 is then evacuated to a predetermined vacuum and is completely sealed by a sealing unit, not shown. Sealing member 13 is fastened to the base 15 with the screw 14, and stator 21 is attached, thus completing the assembly.

Figure 8 illustrates a major portion of a rotating anode X-ray tube device according to a second embodiment of the present invention. Figure 8, the like components are marked with the same symbols as those shown in Figures 1-7 and hence the overlapping detailed description will be omitted with respect to this Figure.

In the embodiment of Figures 1-7, the support member 19 and the shaft 26 are formed as separate members. In the embodiment of Figure 8, however, these components are combined to form a support shaft 61. An inner race 33a of a separation type angular ball bearing 28a includes a groove formed in the outer peripheral surface of the support shaft 61. With such a structure the number of components of the rotary member may be reduced thereby facilitating assembly.

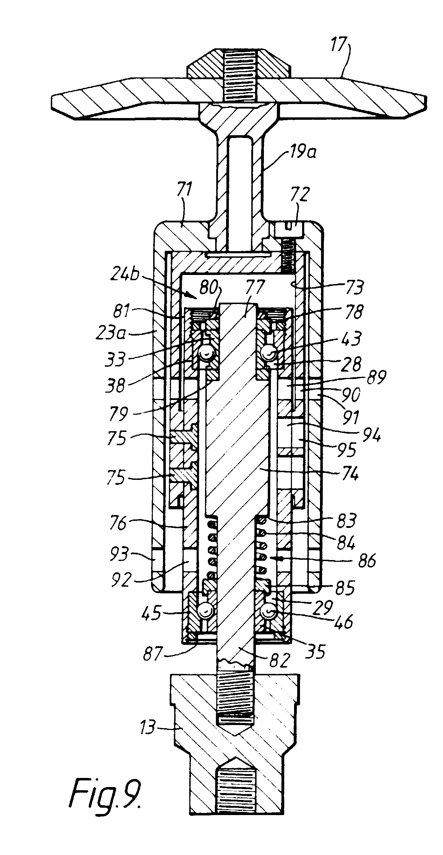

Referring next to Figure 9, there is illustrated a major portion of a rotating anode X-ray tube device according to a third embodiment. In Figure 9, like components are marked with the same symbols as those shown in Figures 1-7, and the overlapping detailed description will therefore be omitted herein.

In this embodiment, an end portion of a rotor 23a is positioned adjacent a rotating anode 17 and is provided with an end cap 71. The end cap 71 is press-fitted on a lower end portion of a support member 19a as shown in Figure 9. A metallic auxiliary cylindrical member 73 is fixed to the inner surface of end cap 71 with a screw 72. A fixed shaft 74 is disposed in the auxiliary cylindrical member 73 so that the fixed shaft 74 is concentrically fitted therein. A lower end of the fixed shaft 74 is connected to the sealing member 13.

A bearing assembly 24b is provided between the fixed shaft 74 and the auxiliary cylindrical member 73. The bearing assembly 24b includes a main cylindrical member 76 fixed to the inside of the auxiliary cylindrical member 73 with a screw 75. Bearing assembly 24b further includes two axially spaced separation-type angular ball bearings 28 and 29 interposed between the main cylindrical member 76 and the fixed shaft 74.

Inner race 33 of separation-type angular ball bearing 28 is mounted on the outer periphery of a small diameter portion 77 formed at an end of the fixed shaft 74 adjacent the support member 19a. Both axial ends of the inner race 33 are held in place by holding rings 78 and 79, each having a larger diameter than that of inner race 33. The inner race 33 is fastened to the fixed shaft 74 with a screw 80. The outer race 38 of the separation-type angular ball bearing 28 is provided with a ball-receiving surface. The outer race 38 is formed on the radially outer periphery of the main cylindrical member 76. The outer race 38, which is biassed upwardly as shown in Figure 9, is mounted on the upper end of the main cylindrical member 76. The cylindrical member 76 is formed with an opening so that the radially inner surface of the opening is aligned with the radially inner surface of the outer race 38. The outer race 38 is fastened to the main cylindrical member 76 with a screw 81.

The inner race 35 of the separation-type angular ball bearing 29 is mounted on the outer periphery of a small diameter portion 82 of the fixed shaft 74. The inner race 35 is movable in the axial direction. Interposed between the inner race 35 and a small diameter portion formed on the fixed shaft 74 is a pressurising mechanism 86 including a coil spring 84 and a slide ring 85 having a diameter slightly larger than that of the inner race 35. The outer race 45 of the bearing 29 is provided with a ball-receiving surface for holding ball 46 in place in bearing 29. The outer race 45, which is biased downwardly as shown in Figure 9, is mounted on the lower end portion of main cylindrical member 76. The radially inner surface of the opening of the main cylindrical member 76 is aligned with the radially inner surface of the outer race 45. The outer race 45 is fastened to the main cylindrical member 76 with a screw 87.

A through-hole 89 having a diameter slightly larger than that of ball 43 is formed in a peripheral wall of the main cylindrical member 76. Through-holes 90 and 91, each having the same diameter as that of the through-hole 89, are coaxially formed in the peripheral walls of the auxiliary cylindrical member 73 and rotor 23a, respectively, so as to face the through-hole 89. Similarly, a through-hole 92 having a diameter slightly larger than that of the ball 46 is formed in the peripheral wall of the main cylindrical member 76 near the upper end, as shown in Figure 9, of outer race 45. A through-hole 93, having a diameter which is the same as that of through-hole 92, is formed coaxially with through-hole 92 in the peripheral wall of rotor 23a as to face through-hole 92. The main cylindrical member 76 and the auxiliary cylindrical member 73 are formed with through-holes 94 and 95, respectively, into which a screw 75 is fastened.

With such an arrangement, the rotary member is assembled, and the imbalanced state thereof is corrected, as in the preceding embodiments shown in Figures 1-7 and 8. Thereafter, the rotary member can be rotatably mounted on the fixed shaft 74. Moreover, the above-described arrangement contributes to an increase in length of a heat transferring passageway between anode 17 and separation type angular ball bearings 28 and 29 because of the presence of the auxiliary cylindrical member 73, thereby diminishing the thermal influences on ball bearings 28 and 29. Also, the diameter of the rotary member in the bearing assembly 24b is enlarged, whereby the rigidity of the rotary member is increased.

The assembling procedures in this embodiment will be hereinafter described. The procedure begins with a step of fixing outer races 38 and 45 to the main cylindrical member 76 with the fastening screws 81 and 87 prior to inserting the main cylindrical member into the auxiliary cylindrical member 73. Then, the main cylindrical member 76 is fixed to the auxiliary cylindrical member 73 with the screw 75 inserted through through-holes 94 and 95. The auxiliary cylindrical member 73 is fixed to the rotor 23a, which has already been fixed to the support member 19a by the screw 72. Then the rotary anode 17 is fixed to the support member 19a. After the rotary member has been assembled, a balancing test is performed on the rotary member by employing testing balls and an inner race, and the imbalance is then corrected. The fixed shaft 74, mounted by inner race 33, holding rings 78 and 79 and fastening screw 80, is inserted into the main cylindrical member 76. The ball receiving groove formed in the inner race 33 is aligned with the through-holes 89, 90 and 91. In this position, the required number of balls 43 are placed through through-holes 89 to 91 into the ball-receiving groove of the inner race 33. The fixed shaft 74 is inserted further into the cylindrical member 76 to such an extent that the ball receiving surface of outer race 38 is brought into contact with balls 43. In this position, the coil spring 84, the slide ring 85 and the inner race 35 are fitted to a small diameter portion of the fixed shaft 74. The inner race 35 is displaced along the shaft against the resisting force of the coil spring 84, to such an extent that the ball-receiving groove of the inner race 35 is brought into alignment with the through-holes 92 and 93. With this arrangement the necessary number of the balls 46 are passed through the through-holes 93 and 92 into the ball receiving groove of the inner race 35. Then, the inner race 35 is released and reverts to its original position by virtue of the force of the coil spring 84 with the result that the balls 46 are held by the inner race 35 and the outer race 45. After ***assembling*** the rotary member the fixed shaft 74 is fixed to the sealing member 13, and thereafter ***incorporated in*** the X-ray device by the same procedures as those used in the embodiment of Figure 1. In the case of dismounting the rotary member from the fixed shaft 74, the reverse procedures to those described above may be performed.

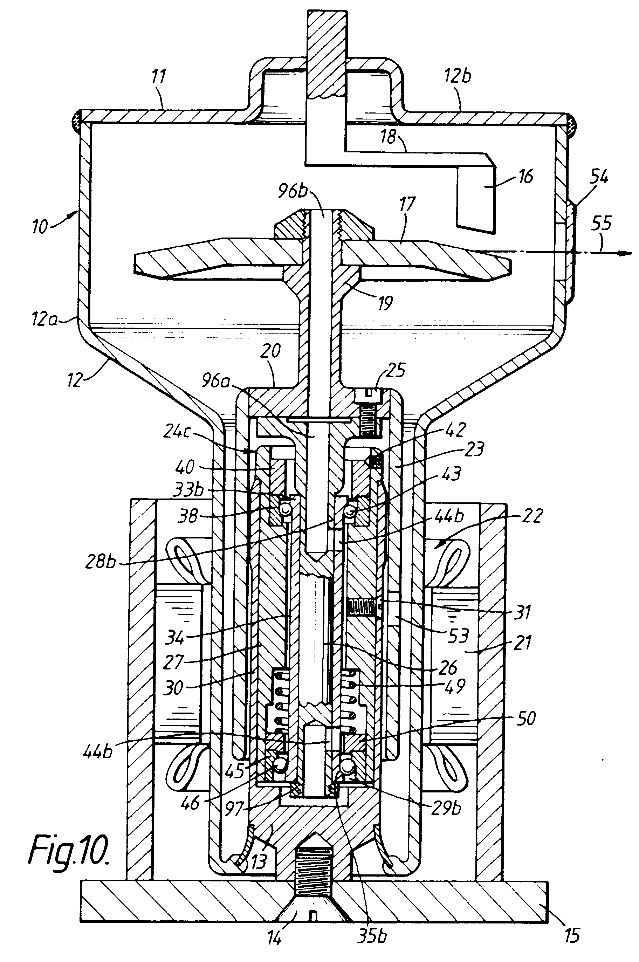

Figures 10 to 12 are views of the major portions of a rotating anode X-ray tube device, according to a fourth, fifth and sixth embodiment, respectively, of the present invention. In these figures, like components are marked with the same symbols as those shown in Figures 1 to 9. The overlapping detailed description is therefore omitted.

Explanation will now be focused on the characteristic arrangement of Figures 10-12. In all of these figures, fixed shaft 74 or shaft 26 is formed with a through-hole serving as a ball passage way extending in the axial and then in the radial direction, and further leading to the outer radial surface of shaft 26.

In the embodiment shown in Figure 10, separation type ball bearings 28b and 29b are installed, in inner races 33b and 35b. Through-holes 44b extend in the radial direction through a sleeve 34 and through the outer peripheral surface of the shaft 26. The shaft 26 is formed with ***blind***-holes 96a and 97 which extend from the upper and lower ends of shaft 26 in the axial direction.

The ***blind*** hole 96a communicates with the through hole 44b and the ***blind*** hole 97 communicates with the other through hole 44b. Support member 19 includes a through-hole 96b which extends in the axial direction and communicates with the ***blind***-hole 96a. Each of the holes 44b, 96a, 96b and 97 has a diameter slightly larger than the diameter of balls 43 and 46. For this reason, the required number of balls 43 and 46 may be fitted into the separation-type ball bearings 28b and 29b, with holes 44b, 96a, 96b and 97 each serving as a ball introducing passageway. By virtue of the bearing assembly 24c, it is possible to incorporate or remove the rotary member, whose imbalanced state has been corrected, without disassembling the rotary member.

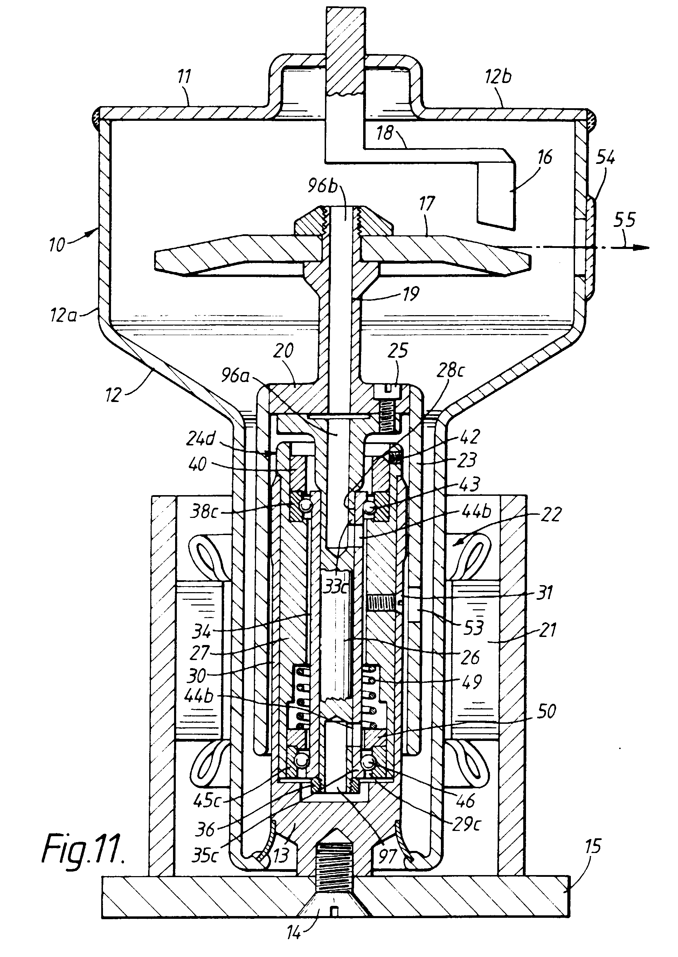

Figure 11 shows a modification of Figure 10, and illustrates still another embodiment according to the present invention. In this example, separation-type ball bearings 28c and 29c include outer races 38c and 45c which are formed with ball receiving grooves. The inner races 33c and 35c, which are biased in opposite directions, are formed to permit passage of the balls 43 and 46. The bearing assembly 24d of this embodiment exhibits the same operation as those in the previous embodiment.

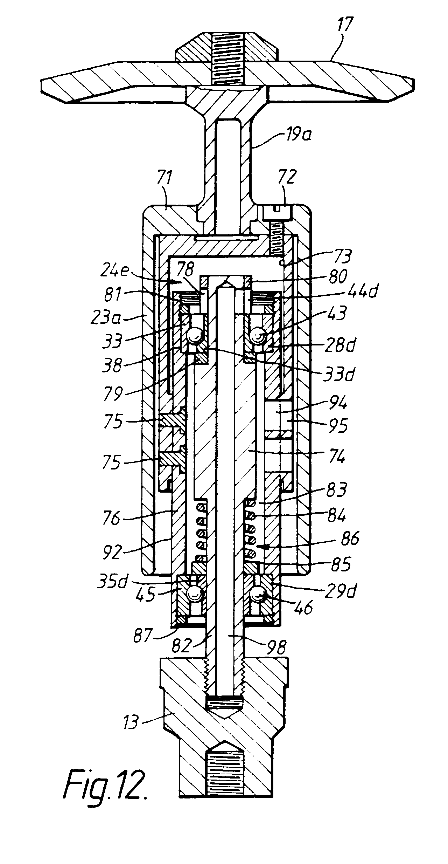

Figure 12 shows a variation of the third embodiment shown in Figure 9, and illustrates a fifth embodiment according to the present invention. In this example, separation type ball bearings 28d and 29d include inner races 33d and 35d which are biassed in opposite directions. Formed in close proximity to inner race 33d is a through-hole 44d extending in the radial direction from the outer surface of a holding ring 78 to the outer surface of fixed shaft 74. Fixed shaft 74 is formed with a through-hole 98 which extends from the lower end of the shaft in the axial direction. Through-hole 98 communicates with through-hole 44d. Through-holes 44d and 98 each have a slightly greater diameter than that of ball 43. As in the preceding embodiment, it is therefore possible to fit the necessary number of balls 43 into the separation type ball bearing 28d, with through-holes 44d and 98 serving as ball introducing passageways. The balls 46 can be fitted into the ball bearing 29d from a space outside the main cylindrical member 76. By virtue of the bearing device 42e, the rotary member can be incorporated or removed without disassembling the rotary member, the imbalanced state of which has already been corrected. The same results as those described in the previous embodiment can be obtained.

In the embodiment of Figure 12, the directions in which the outer races 38 and 45 are biased is opposite to those shown in Figure 1. The pressurising direction of the pressurising mechanism ***provided by the coil spring (84) and the slide ring 85*** acts to bias the inner race 35 down while the pressurising mechanism in the first embodiment presses the outer race 45 down. If the clearance of each individual component is accurately set, the pressurising mechanism may be altogether omitted.

The embodiments described above exemplify a case where two separation-type ball bearings are employed. However, modifications of the bearing arrangement may be made without departing from the scope of the general inventive concept. For instance, one ball bearing more distant from the rotating anode than the other may be replaced by an ordinary ball bearing. Also, the above-mentioned characteristic functions of bearing assemblies 24 and 24a-24e, respectively, are not confined to the rotating anode X-ray tube device but may support a wide variety of rotary bodies.

In an embodiment (not shown) the rotor and the cylindrical member may be integrally formed.

Additional advantages and modifications will readily occur to those skilled in the art. The invention in its broader aspects is, therefore, not limited to the specific details, representative apparatus and illustrative examples shown and described.

## Claims

1. A bearing assembly for an X-ray tube device comprising:
a hollow cylindrical member (27, 76);
a shaft (26, 74) concentrically disposed in an axial chamber in said cylindrical member (27, 76);
at least one separable type ball ***bearing*** (28, 29) interposed between said cylindrical member (27,76) and shaft (26, 74) for supporting a relative rotating motion therebetween;
said ball bearing (28, 29) having separable inner (33, 35) and outer races (38, 45), ***whereby*** one of said inner (33, 35) or said outer race (38, 45) ***is*** axially displaceable relative to the other of the races ***in order*** to open the bearing ***at one end****,* and
characterised in that a through-hole (44, 89, 92) serves as a ball introduction passageway during assembly, said through-hole (44, 89, 92) leading ***radially outwardly*** from a position near the end of ***the axially displaceable race*** to an outer surface of said cylindrical member (27, 76) or ***radially inwardly through the peripheral surface of the shaft (26, 74)****.*

2. A bearing assembly according to claim 1, wherein a second axially spaced separable-type ball bearing (28,29) is provided.

3. A bearing assembly according to claim 1 or claim 2, wherein said ***displaceable*** race is an outer race (38,45), and said through-hole (44,89,92) extends to the outside surface of said cylinderical member (27,76).

4. A bearing assembly according to claim 1, wherein said ***displaceable*** race is an inner race (33,35), and said through-hole (44,89,92) extends inwardly and then in the axial direction to an axially outer surface of said shaft (26,74).

5. A bearing assembly according to claim 1, wherein a loading mechanism (51,86) applies a loading force to said outer race (38,45) acting in an axial direction.

6. A bearing assembly according to any one of the preceding claims, wherein said inner race (33,35) and said shaft (26,74) are integrally formed.

7. A bearing assembly according to any one of the preceding claim, wherein said through-hole (44,89,92) is closed after assembly.

8. A bearing assembly according to claim 1, said bearing assembly further includes means (37) for preventing dispersion of said balls (43,46) in the axial direction when said balls (43,46) are introduced between said inner race (33,35) and said outer race (38,45).

9. A bearing assembly according to claim 8 wherein said dispersion prevention means comprises,
a protruding peripheral wall (37).

10. A bearing assembly according to claim 9 wherein the protruding peripheral wall (37) is provided by a sleeve (34) mounted upon the shaft (26).

11. A bearing assembly according to claim 6 and claim 9 wherein the peripheral wall protrudes from the shaft (61).

12. A bearing assembly according to claim 9 wherein the protruding peripheral walls are provided by holding rings (78,79,85).

13. A bearing assembly according to any one of the preceding claims in a rotating anode X-ray tube device, wherein:
a support member (19) is co-axially supported by ***whichever*** of the shaft (26) or the cylindrical member *(76)* ***rotates****,*
said support member (19) supporting an anode (17) for rotation within a vacuum envelope (11),
a cathode (16) disposed in said vacuum envelope (11) spaced from and facing the anode (17),
a hollow cylindrical rotor (23,23a) within the vacuum envelope (11) arranged to co-operate with a stator (21) mounted outside the vacuum envelope (11).

14. A bearing assembly according to claim 13 wherein the support member (19) and the shaft (61) are integrally formed.

15. A bearing assembly according to claim 13 wherein the rotor (23a) and the cylindrical member (76) are integrally formed.

16. A bearing assembly according to any one of claims 13 to 15 wherein a further through-hole (52,91,93) is formed in the rotor (23,23a) to permit the introduction of the balls.

## Patentansprüche

1. Lageranordnung für eine Röntgenröhrenvorrichtung, mit:
einem hohlen zylindrischen Bauteil (27, 76);
einer Welle (26, 74), die konzentrisch in einem axial verlaufenden Hohlraum in dem zylindrischen Bauteil (27, 76) angeordnet ist;
zumindest einem trennbaren Kugellager (28, 29), das zwischen dem zylindrischen Bauteil (27, 76) und der Welle (26, 74) angeordnet ist, um zwischen diesen eine relative Drehbewegung aufzunehmen;
wobei das Kugellager (28, 29) trennbare, innere (33, 35) und äußere Rillen (38, 45) aufweist, wodurch eine der inneren (33, 35) oder der äußeren Rillen (38, 45) relativ zu den anderen Rillen axial verlagerbar ist, um das Lager an einem Ende zu öffnen, und
dadurch gekennzeichnet, daß beim Zusammenbau eine Durchgangsöffnung (44, 89, 92) als ein Kugelzuführungskanal dient, wobei sich die Durchgangsöffnung (44, 89, 92) von einer Position nahe dem Ende der axial verlagerbaren Rille radial nach außen in Richtung auf eine äußere Fläche des zylindrischen Bauteils (27, 76) oder radial nach innen durch die Umfangsfläche der Welle (26, 74) erstreckt.

2. Lageranordnung nach Anspruch 1, bei der ein zweites, in axialer Richtung beabstandetes trennbares Kugellager (28, 29) vorgesehen ist.

3. Lageranordnung nach Anspruch 1 oder Anspruch 2, bei der die verlagerbare Rille eine äußere Rille (38, 45) ist und bei der sich die Durchgangsöffnung (44, 89, 92) durch die äußere Fläche des zylindrischen Bauteils (27, 76) erstreckt.

4. Lageranordnung nach Anspruch 1, bei der die verlagerbare Rille eine innere Rille (33, 35) ist und bei der sich die Durchgangsöffnung (44, 89, 92) nach innen und dann in axialer Richtung auf eine axial verlaufende äußere Fläche der Welle (26, 74) erstreckt.

5. Lageranordnung nach Anspruch 1, bei der ein Vorspannmechanismus (51, 86) auf die äußere Rille (38, 45) eine Vorspannkraft aufbringt, die in eine axiale Richtung wirkt.

6. Lageranordnung nach einem der vorhergehenden Ansprüche, bei der die innere Rille (33, 35) und die Welle (26, 74) integriert ausgebildet sind.

7. Lageranordnung nach einem der vorhergehenden Ansprüche, bei der die Durchgangsöffnung (44, 89, 92) nach dem Zusammenbau geschlossen ist.

8. Lageranordnung nach Anspruch 1, bei der die Lageranordnung außerdem eine Einrichtung (37) enthält, um ein Verrutschen der Kugeln (43, 46) in axialer Richtung zu verhindern, wenn die Kugeln (43, 46) zwischen der inneren Rille (33, 35) und der äußeren Rille (38, 45) eingesetzt sind.

9. Lageranordnung nach Anspruch 8, bei der die Einrichtung zum Verhindern des Verrutschens eine abstehende Umfangswand (37) umfaßt.

10. Lageranordnung nach Anspruch 9, bei der die vorspringende Umfangswand (37) durch eine Muffe (34) gebildet ist, die auf der Welle (26) angebracht ist.

11. Lageranordnung nach Anspruch 6 und Anspruch 9, bei der die Umfangswand von der Welle (61) absteht.

12. Lageranordnung nach Anspruch 9, bei der die abstehenden Umfangswände durch Halteringe (78, 79, 85) gebildet sind.

13. Lageranordnung nach einem der vorhergehenden Ansprüche in einer Drehanoden-Röntgenröhrenvorrichtung, wobei:
ein Haltebauteil (19) entweder von der sich drehenden Welle (26) oder von dem sich drehenden zylindrischen Bauteil (76) koaxial gehalten ist,
das Haltebauteil (19) eine Anode (17) drehbar in einer Vakuumkammer (11) hält,
in der Vakuumkammer (11) eine Kathode (16) vorgesehen ist, die von der Anode (17) beabstandet ist und dieser gegenüberliegt,
in der Vakuumkammer (11) ein hohler zylindrischer Rotor (23, 23a) angeordnet ist, um mit einem Stator (21) zusammenzuwirken, der außerhalb der Vakuumkammer (11) angebracht ist.

14. Lageranordnung nach Anspruch 13, bei der das Haltebauteil (19) und die Welle (61) integriert gebildet sind.

15. Lageranordnung nach Anspruch 13, bei der der Rotor (23a) und das zylindrische Bauteil (76) integriert gebildet sind.

16. Lageranordnung nach einem der Ansprüche 13 bis 15, bei der in dem Rotor (23, 23a) eine weitere Durchgangsöffnung (52, 91, 93) vorgesehen ist, um das Zuführen der Kugeln zu ermöglichen.

## Revendications

1. Assemblage de palier pour tube à rayons X comprenant :
un organe cylindrique creux (27, 76) ;
un arbre (26, 74) disposé de manière concentrique dans une chambre axiale se trouvant dans ledit organe cylindrique (27, 76) ;
au moins un roulement à billes (28, 29) du type détachable, intercalé entre ledit organe cylindrique (27, 76) et l'arbre (26, 74) pour supporter un mouvement de rotation relatif entre eux ;
ledit roulement à billes (28, 29) comportant des chemins de roulement intérieur (33, 35) et extérieur (38, 45), séparables, de telle sorte que l'un desdits chemins de roulement intérieur (33, 35) ou extérieur (38, 45) soit déplaçable axialement par rapport à l'autre chemin de roulement pour ouvrir le roulement à une extrémité, et
caractérisé en ce qu'un trou de passage (44, 89, 92) sert de voie de passage pour l'introduction de billes durant l'assemblage, ledit trou de passage (44, 89, 92) conduisant radialement vers l'extérieur, d'une position proche de l'extrémité du chemin de roulement déplaçable axialement à une surface extérieure dudit organe cylindrique (27, 76), ou radialement vers l'intérieur à travers la surface périphérique de l'arbre (26, 74).

2. Assemblage de palier selon la revendication 1, dans lequel il existe un deuxième roulement à billes (28, 29) du type détachable, espacé axialement.

3. Assemblage de palier selon la revendication 1 ou la revendication 2, dans lequel ledit chemin de roulement déplaçable est un chemin de roulement extérieur (38, 45), et ledit trou de passage (44, 89, 92) s'étend vers la surface extérieure dudit organe cylindrique (27, 76).

4. Assemblage de palier selon la revendication 1, dans lequel ledit chemin de roulement déplaçable est un chemin de roulement intérieur (33, 35), et ledit trou de passage (44, 89, 92) s'étend vers l'intérieur, puis dans la direction axiale à une surface axialement extérieure dudit arbre (26, 74).

5. Assemblage de palier selon la revendication 1, dans lequel un mécanisme de chargement (51, 86) applique une force de chargement audit chemin de roulement extérieur (38, 45) agissant dans une direction axiale.

6. Assemblage de palier selon l'une quelconque des revendications précédentes, dans lequel ledit chemin de roulement intérieur (33, 35) et ledit arbre (26, 74) sont formés d'un seul tenant.

7. Assemblage de palier selon l'une quelconque des revendications précédentes, dans lequel ledit trou de passage (44, 89, 92) est fermé après assemblage.

8. Assemblage de palier selon la revendication 1, ledit assemblage de palier comprend en outre des moyens (37) pour empêcher une dispersion desdites billes (43, 46) dans la direction axiale, quand lesdites billes (43, 46) sont introduites entre ledit chemin de roulement intérieur (33, 35) et ledit chemin de roulement extérieur (38, 45).

9. Assemblage de palier selon la revendication 8, dans lequel lesdits moyens anti-dispersion comprennent une paroi périphérique saillante (37).

10. Assemblage de palier selon la revendication 9, dans lequel la paroi périphérique saillante (37) est fournie par un manchon (34) monté sur l'arbre (26).

11. Assemblage de palier selon la revendication 6 et la revendication 9, dans lequel la paroi périphérique fait saillie depuis l'arbre (61).

12. Assemblage de palier selon la revendication 9, dans lequel les parois périphériques saillantes sont fournies par des anneaux de maintien (78, 79, 85).

13. Assemblage de palier selon l'une quelconque des revendications précédentes, se trouvant dans un tube à rayons X à anode tournante, dans lequel :
un élément formant support (19), qui est supporté de manière coaxiale soit par l'arbre (26), soit par l'organe cylindrique (76), tourne,
ledit élément formant support (19) supporte une anode (17) en vue d'une rotation à l'intérieur d'une enveloppe sous vide (11),
une cathode (16) est disposée dans ladite enveloppe sous vide (11), séparée de et faisant face à l'anode (17),
un rotor cylindrique creux (23, 23a), à l'intérieur de l'enveloppe sous vide (11), est agencé pour coopérer avec un stator (21) monté à l'extérieur de l'enveloppe sous vide (11).

14. Assemblage de palier selon la revendication 13, dans lequel l'élément formant support (19) et l'arbre (61) sont formés d'un seul tenant.

15. Assemblage de palier selon la revendication 13, dans lequel le rotor (23a) et l'organe cylindrique (76) sont formés d'un seul tenant.

16. Assemblage de palier selon l'une quelconque des revendications 13 à 15, dans lequel un autre trou de passage (52, 91, 93) est formé dans le rotor (23, 23a) pour permettre l'introduction des billes.
